# EUROPEAN PATENT APPLICATION

(11) **EP 3 235 661 A1**
(43) Date of publication of application: **25.10.2017**
(21) Application number: 17166768.6
(22) Date of filing: 18.04.2017
(51) Int. Cl.: B60C 1/00, C08L 7/00

(54) **REINFORCING TYRE PLIES**

(30) Priority: 21.04.2016 IT UA20162786
(71) Applicant: Bridgestone Corporation, Chuo-Ku Tokyo 104-8340 (JP)
(72) Inventor: Lombardi, Roberto, 00128 Roma (IT); Privitera, Davide, 00128 Roma (IT)
(74) Representative: Marchetti, Alessio

(57) **Abstract**

A reinforcing ply for tyres made from a textile material and/or a metallic material and suitable for being incorporated into a body ply skim layer. The ply is at least partially coated with a reinforcing composition comprising polyethylene glycol in which calcium carbonate and/or silica is dispersed.

## Description

The present invention relates to reinforcing plies for tyres.

In the production of tyres, in order to ensure required resistance standards, reinforcing plies are used which are made from a textile material (nylon, rayon, polyester, aramid) and/or a metallic material, such as for example steel.

Generally, the plies are treated with an adhesive and, subsequently, rubberized up to a thickness of about 1 mm. The coating rubber of the plies is commonly referred to by the English term "body ply skim" and this expression shall be employed within the description that follows and in the attached claims.

As known to a person skilled in the art, reinforcing plies are commonly used as a reinforcing material in the carcass and the belts. In particular, the latter are arranged between the carcass and the tread.

The carcass serves to define the geometry of the tyre, support the load and transfer the vehicle stresses to the ground, and ensure the endurance strength to the stressed areas. The belts serve to further increase the tyre resistance, stabilizing the tread and ensuring protection of the most inner layers against bumps and punctures.

In this respect, it is known that during use the tyres are prone to a series of high-speed impacts that can necessarily lead to a rupture of the reinforcing plies

One of the possible solutions to more protect the integrity of the ply skim is to increase the filler content (carbon black) in the compound of the body ply skim. Such a solution, even if it improves the impact, however, suffers from the disadvantage of causing an increase in rolling resistance.

The need for a solution, which is capable of increasing the impact resistance without increasing the rolling resistance was required.

The inventors of the present invention have found a solution whose technical characteristics are capable of satisfying the abovementioned need.

The object of the present invention is a reinforcing ply for tyres made from a textile and/or metallic material and suitable for being incorporated into a body ply skim layer; said ply being characterized by the fact of being at least partially coated with a reinforcing composition comprising polyethylene glycol, in which calcium carbonate and/or silica is dispersed; said polyethylene glycol having a molecular weight comprised between 100 and 1000. The molecular weight of the thermoplastic polymer is measurable using the method according to ISO-11344 standard.

It has experimentally been proven by the inventors that the values of molecular weight mentioned above are the ones that guarantee the required fluidity characteristics to reproduce the invention.

Preferably, such a reinforcing composition comprises silica and/or calcium carbonate from 40 to 60% by weight.

A further object of the present invention is a tyre comprising the reinforcing plies, object of the present invention.

Preferably, the reinforcing composition comprises silica in combination with a silane bonding agent and dispersed in polyethylene glycol, while the body ply skim layer, in which said reinforcing plies are incorporated, is made using a compound comprising at least one cross-linkable unsaturated-chain polymeric base, silica, silane bonding agent and a vulcanization system.

Here and hereinafter, the term "cross-linkable unsaturated chain polymer base" refers to any natural or synthetic non-cross-linked polymer capable of assuming all of the chemical-physical and mechanical characteristics typically assumed by elastomers after cross-linking (vulcanization) with sulfur-based systems.

Here and hereinafter, vulcanization system means a complex of ingredients comprising at least sulfur and some accelerating compositions that, during the preparation of the compound are added in a final mixing step and are aimed for promoting the vulcanization of the polymer base once the compound is subjected to a vulcanization temperature.

Preferably, said compound from which the body ply skim layer is made, comprises from 10 to 40 phr of silica and from 1 to 5 phr of silane bonding agent.

For a better understanding of the invention, the following examples are used for illustrative and nonlimiting purposes.

The examples involved the preparation of a body ply skim compound within which a reinforcing ply has been incorporated.

In particular, two comparative examples (Comp.1 and Comp.2) and four examples according to the present invention (A - D) are prepared.

The first comparative example (Comp.1) regarded a body ply skim compound comprising carbon black as a reinforcing filler and a reinforcing ply not coated with the reinforcing composition according to the invention. This comparative example represents the solution currently adopted. The second comparative example (Comp.2) differs from the first one by the fact that part of the carbon black is replaced with silica.

The examples according to the invention (A -D) differ respectively from the first one (Comp.1) and from the second comparative example (Comp.2) for the mere fact that this time the reinforcing ply is coated with the reinforcing composition according to the invention.

The following is the procedure for the preparation of the example compounds

### - Preparation of the compounds -

### (1st mixing step)

Before starting to mix, a mixer with tangential rotors and an internal volume of between 230 and 270 liters is loaded with the polymer base, the reinforcing filler, and if required the silane binder, reaching a filling factor of 66-72%.

The mixer is operated at a speed of 40-60 rpm, and the mixture thus formed is discharged once a temperature of 145-165°C has been reached.

### (2nd mixing step)

The mixture from the previous step is reprocessed in the mixer operating at a speed of 40-60 rpm and subsequently discharged once a temperature of 130-150°C has been reached.

### (3rd mixing step)

Added to the mixture from the previous step are stearic acid and the vulcanization system composed of sulfur, accelerators and zinc oxide reaching a filling factor of 63-67%.

In Table I, the compositions prepared for the body ply skim compounds are reported in phr.

**TABLE I**

| | Comp.1 / A and B | Comp.2 / C and D |
|---|---|---|
| Natural rubber | 100 | |
| ZnO | 5 | |
| Sulfur | 5 | |
| Accelerator | 2 | |
| Antioxidant | 2 | |
| Plasticizer | 2 | |
| Carbon black | 50 | 30 |
| Silica | -- | 20 |
| Silane binder | -- | 2 |

The accelerator used is cyclohexyl-benzothiazyl-sulfenamide (CBS).

The antioxidant used is N-(1,3-Dimethylbutyl)-N'-phenyl-p-phenylenediamine (6PPD).

The plasticizer used is of the RAE OIL type.

The carbon black used is identified with the code N330.

The silica used is marketed by the company EVONIK under the trade name VN3.

The silane binder used is marketed by the company EVONIK under the name SI75.

As mentioned above, the body ply skim compounds reported in Table I are arranged as coatings of both the "bare" reinforcing plies (not coated by the reinforcing composition) (Comp.1 and Comp.2) and the reinforcing plies coated by the reinforcing composition (A -D).

The following is the procedure by which the reinforcing compositions are made and the procedure according to which the reinforcing compositions are applied to the reinforcing plies.

### - Procedure for preparing the reinforcing compositions

Two solutions comprising 50% by weight of PEG (with a molecular weight of 650) and 50% by weight respectively of silica (examples A and C) and of calcium carbonate (examples B and D) are prepared. A silane bonding agent is added to the solution relative to the examples A and C in an amount equal to 1/20 of the silica content. The silica used is marketed by the company EVONIK under the trade name VN3; while the silane binder used is marketed by the company EVONIK under the name SI75.

The two solutions are subjected to centrifugation for 2 hours.

After centrifugation, the two solutions are homogenized by ultrasound for one hour at room temperature.

After homogenization, the two solutions are drawn under vacuum for twenty-four hours at 60°C to remove the residual air, therby obtaining respectively two reinforcing compositions according to the present invention.

### - Procedure for applying the reinforcing compositions on the cords of the reinforcing ply -

Each of the reinforcing compositions described above are diluted with 50% by weight of ethanol. After dilution, polyester 1670/2 cords composing the reinforcing ply are immersed within the reinforcing composition. The cords are kept immersed within the reinforcing composition for 2 hours at room temperature.

After the immersion period, the cords are kept in an oven at 80°C for 20 minutes to cause the evaporation of the ethanol.

Once the comparative examples are produced (Comp.1 and Comp.2; body ply skim compound which incorporates the bare ply) and the examples of the invention (A - D; body ply skim compound which incorporates the ply coated by the reinforcing composition), the same are subjected to a test, in order to measure the impact resistance and the rolling resistance thereof.

The impact resistance is measured according to the ASTM D1054 standard; the rolling resistance is evaluated on the basis of the dynamic properties measured in accordance with the ISO 4664 standard. In particular, as known by a person skilled in the art, the rolling resistance parameter is evaluated depending on the tanδ values (the lower the tanδ value, the better the rolling resistance.)

The values obtained from the tests described above are reported in Table II. For a more immediate evaluation of the results, the values in Table II are indexed to the Comp.1 values. The higher the indicated value, the better the performance in terms of impact resistance and rolling resistance.

**TABLE II**

| | Comp.1 | A | B | Comp.2 | C | D |
|---|---|---|---|---|---|---|
| Rolling resistance | 100 | 100 | 100 | 110 | 110 | 110 |
| Impact resistance | 100 | 110 | 110 | 100 | 120 | 110 |

As can be verified from Table II values, the solution of the present invention (plies coated with the reinforcing composition) is able to ensure a marked improvement in terms of impact resistance. In addition, it is important to note that this improvement in terms of impact resistance does not compromise the rolling resistance in any way.

Finally, from the values reported in Table II it is clearly evident that, when the body ply skim compound comprises silica (Comp.2), the use of a reinforcing composition comprising similarly silica (example C) guarantees an even more pronounced improvement in terms of impact resistance.

## Claims

1. Reinforcing ply for tyres made from a textile material and/or a metallic material and suitable for being incorporated into a body ply skim layer; said ply being **characterized by** the fact of being at least partially coated with a reinforcing composition comprising polyethylene glycol in which calcium carbonate and/or silica is dispersed; said polyethylene glycol having a molecular weight comprised between 100 and 1000

2. The reinforcing ply for tyres according to claim 1, **characterized by** the fact of comprising from 40 to 60% by weight of calcium carbonate and/or silica.

3. Tyre **characterized by** the fact of comprising the reinforcing plies according to one of the preceding claims.

4. The tyre according to claim 3, **characterized by** the fact that the reinforcing composition comprises silica in combination with a silane bonding agent and the reinforcing ply is incorporated into a body ply skim layer made with a compound comprising at least a cross-linkable unsaturated-chain polymer base, a reinforcing filler comprising silica, silane bonding agent and a vulcanization system.

5. The tyre according to claim 4, **characterized by** the fact that said compound from which the body ply skim layer is made, comprises from 10 to 40 phr of silica and from 1 to 5 phr of silane bonding agent.
